# FASCICULE DE BREVET EUROPEEN

(11) **EP 2 000 422 B1**
(45) Date de publication et mention de la délivrance du brevet: **02.05.2012**
(21) Numéro de dépôt: 08157674.6
(22) Date de dépôt: 05.06.2008
(51) Int. Cl.: B65D 81/38

(54) **Elément d'emballage pour la réalisation d'un emballage isotherme et emballage obtenu**
Verpackungselement zur Herstellung einer isothermen Verpackung und erhaltene Verpackung
Packaging element for manufacturing a thermally insulated packaging and packaging obtained

(30) Priorité: 07.06.2007 FR 0755542
(43) Date de publication de la demande: 10.12.2008
(73) Titulaire: Messer France, 92800 Puteaux (FR)
(72) Inventeur: Spinosa, Natacha, 94160 Sainte-Mande (FR); Boisaubert, Hervé, 77166 Grisy-Suisnes (FR)
(74) Mandataire: Blanchard, Eugène Gilles

(56) Documents cités:
- WO-A-01/42092
- WO-A-99/32374
- FR-A- 1 191 499
- FR-A- 2 759 676
- FR-A- 2 882 993
- US-A- 2 087 966
- US-B1- 6 189 330

## Description

La présente invention concerne le domaine technique de l'emballage de produits divers dans des conditions d'isolation thermique permettant de ralentir leur réchauffement ou leur refroidissement.

Dans le domaine ci-dessus, il est connu de mettre en oeuvre des emballages dits isothermes réalisés en matière isolante conformée pour définir une boîte ou une caisse rigide dans laquelle sont placés les produits à protéger des brusques variations de températures.

De telles boîtes ou caisses de conditionnement donnent pleinement satisfaction en ce qui concerne l'isolation thermique des produits qu'elles contiennent, mais présentent néanmoins l'inconvénient de présenter un volume relativement important qui rend leur stockage difficile en dehors des périodes d'utilisation. Telles boîtes ou caisses sont divulgués par WO 0 142 092, US 2 087 966 ou FR 1 191 499.

Il est donc apparu le besoin d'un nouveau type de conditionnement qui puisse être stocké dans un état présentant un volume très nettement inférieur au volume occupé par le conditionnement en configuration normale d'utilisation.

Afin d'atteindre cet objectif, l'invention concerne un élément d'emballage pour la protection et l'isolation thermique de produits divers selon la revendication 1.

Un tel élément d'emballage peut alors être facilement inséré dans une caisse ou dans un suremballage pour y former une partie de l'isolation thermique. Ainsi, par exemple dans le cadre de l'utilisation d'une caisse américaine susceptible d'être stockée dans un état pré conformé plat, il est possible de disposer d'une part, de la caisse et, d'autre part, de l'élément d'emballage selon l'invention stockés à plat et occupant ainsi un volume réduit pour ensuite lors du conditionnement des produits mettre en volume la caisse et y introduire l'insert. De plus, compte tenu de la liaison des panneaux isolants avec la structure articulée, la mise en place de l'isolation thermique et s'effectue simplement et rapidement.

Selon une caractéristique de l'invention visant à réduire autant que faire se peut les phénomènes de ponts thermiques, les panneaux isolants de côté sont adaptés pour qu'au niveau de chaque angle formé par deux panneaux de côtés adjacents, la tranche d'un panneau isolant soit en appui sur une face du panneau isolant adjacent, lorsque l'élément d'emballage est mis en volume.

Selon une autre caractéristique de l'invention, la structure articulée comprend un panneau de fond séparé de l'un au moins des panneaux de côté par une ligne de pliage.

Dans le cadre de cette caractéristique et selon une forme préférée de réalisation, le panneau de fond, de la structure articulée, est bordé par les quatre panneaux de côté qui sont chacun séparés du panneau de fond par une ligne de pliage. Ainsi la structure articulée présente une forme générale de croix particulièrement facile à mettre en volume. Cette mise en volume peut s'effectuer de façon quasi automatique par la simple introduction de l'élément d'emballage en appuyant sur le fond de ce dernier.

Toujours dans le cadre de cette caractéristique, la structure articulée peut comprendre un panneau de dessus séparé d'un panneau de côté par une ligne de pliage.

Selon la nature du matériau constitutif des panneaux isolants et selon également la nature des produits à conditionner et notamment leur faculté à engendrer des phénomènes de condensation, les panneaux isolants de côté peuvent être placés sur la face interne ou la face externe des panneaux constitutifs de la structure articulée.

Selon une première variante de réalisation, qui ne fait pas partie de l'invention; les panneaux isolants de côté sont placés sur la face interne des panneaux de côté.

Dans le cadre de cette première variante de réalisation et selon une caractéristique visant à réduire les phénomènes de ponts thermiques, l'élément d'emballage comprend :
■ un panneau isolant d'épaisseur **e** est fixé sur la face interne du panneau de fond et en couvre toute la surface,
■ et les panneaux isolants de côté possèdent une épaisseur **e'** et sont chacun disposés sur la face interne du panneau de côté correspondant, d'une part, à une distance **d,** de la ligne de pliage correspondante, supérieure ou égale à l'épaisseur **e** et, d'autre part, à une distance **d',** d'un des bords du panneau de côté perpendiculaire à la ligne de pliage, supérieure ou égale à l'épaisseur **e',** de manière que, lors de la mise en volume de l'élément d'emballage, la tranche inférieure des panneaux isolants de côté vienne en appui sur le panneau isolant de fond et l'une des tranches latérales de chaque panneau isolant de côté vienne en appui contre un panneau isolant de côté adjacent.

Dans le cadre de cette première variante de réalisation, les panneaux isolants de côté présentent chacun, au niveau de leur face opposée au panneau de côté correspondant, des rainures s'étendant selon une direction perpendiculaire au panneau de fond lorsque l'élément d'emballage est mis en volume. Cette caractéristique de l'invention vise à permettre la circulation d'air entre les panneaux isolants de côté et un ou des produits en appui sur ces derniers.

Selon une deuxième variante de réalisation, les panneaux isolants de côté sont placés sur les faces externes des panneaux de côté.

Dans le cadre de cette deuxième variante de réalisation et selon une caractéristique de l'invention visant à réduire les phénomènes de ponts thermiques, les panneaux isolants de côté possèdent une épaisseur **e',** sont chacun placés sur la face externe des panneaux de côté et débordent chacun du panneau de côté correspondant d'une longueur supérieure ou égale à l'épaisseur **e'.**

L'invention vise également à la réalisation d'emballage isotherme recyclable et 100 % biodégradable en application de la norme EN 13 432. Ainsi, selon une forme préférée de réalisation, la structure articulée et les panneaux isolants sont réalisés en matériaux biodégradables, les panneaux isolants étant de préférence réalisés à base de fécule de pomme de terre ou d'amidon de maïs et la structure articulée étant de préférence réalisée en carton compact ou carton ondulé biodégradable.

L'invention concerne également un emballage pour le conditionnement et l'isolation thermique de produits divers, caractérisé en ce qu'il comprend :
■ une caisse de forme générale parallélépipédique comprenant au moins une ouverture supérieure associée à des moyens de fermeture,
■ un élément d'emballage selon l'invention mis en volume et disposé dans la caisse pour y définir un compartiment isotherme de réception de produits.

Selon une première variante de réalisation de l'emballage conforme à l'invention, l'emballage comprend :
■ un panneau isolant de fond, de forme rectangulaire complémentaire à celle de la caisse, recouvrant l'intégralité du fond de la caisse,
■ un élément d'emballage selon la première variante de réalisation qui est mis en volume et disposé dans la caisse sur le panneau isolant de fond et qui définit le compartiment isotherme ouvert sur le dessus,
■ un panneau isolant de dessus, de forme rectangulaire complémentaire à celle de la caisse, qui est placé en appui sur l'élément d'emballage de manière à isoler le compartiment isotherme des moyens de fermeture de la caisse.

Dans le cadre de cette première variante de réalisation de l'emballage conforme à l'invention et selon une caractéristique de l'invention, le panneau isolant de dessus est fixé sur un contre panneau de fond qui est réalisé dans le même matériau que la structure articulée de l'élément d'emballage et qui est orienté vers le compartiment isotherme.

Selon une deuxième variante de réalisation de l'emballage, l'emballage comprend:
■ un premier élément d'emballage, selon la première variante de réalisation de l'élément d'emballage, qui est mis en volume et disposé dans la caisse sur le panneau isolant de fond et qui définit un premier compartiment isotherme ouvert sur le dessus,
■ un panneau isolant intercalaire, de forme rectangulaire complémentaire à celle de la caisse, qui est placé en appui sur l'élément d'emballage de manière à fermer le dessus du compartiment isotherme,
■ un deuxième élément d'emballage, selon la deuxième variante de réalisation de l'élément d'emballage, qui est mis en volume et disposé dans la caisse sur le panneau isolant intercalaire et qui définit un deuxième compartiment isotherme destiné à recevoir des moyens d'accumulation de froid,
■ un panneau isolant de dessus, de forme rectangulaire complémentaire à celle de la caisse, qui est situé au-dessus du deuxième élément d'emballage de manière à isoler le deuxième compartiment isotherme des moyens de fermeture de la caisse.

Dans le cadre de cette deuxième variante de réalisation de l'emballage, la face du panneau intercalaire orientée vers l'intérieur du premier compartiment isotherme est rainurée. Cette caractéristique vise à favoriser la circulation d'air entre le panneau intercalaire isolant et un ou plusieurs produits en appui sur ce dernier.

Toujours dans le cadre de ce deuxième variante de réalisation de l'emballage, les parois latérales de la caisse comprennent des moyens de découpes périphériques aménagés au voisinage de l'ouverture supérieure du premier compartiment isotherme et adaptés pour permettre, par la découpe des parois latérales, une séparation entre la partie de la caisse renfermant le premier compartiment isotherme et la partie de la caisse en fermant le deuxième compartiment isotherme de manière à permettre un accès direct au premier compartiment isotherme. Cette caractéristique est particulièrement avantageuse lorsqu'il est nécessaire d'éviter au contenu du deuxième compartiment isotherme un contact direct avec un utilisateur de l'emballage, ce qui est notamment le cas lorsque le deuxième compartiment isotherme contient de la glace ou de la neige carbonique.

Bien entendu, les différentes caractéristiques de l'invention évoquées ci-dessus peuvent être mises en oeuvre les unes avec les autres selon différentes combinaisons lorsqu'elles ne sont pas exclusives les unes des autres.

Diverses autres caractéristiques de l'invention ressortent de la description faite ci-dessous en référence aux dessins annexés qui montrent, à titre d'exemples non limitatifs, des formes de réalisation de l'objet de l'invention.
La **fig. 1** est une coupe longitudinale d'une variante de réalisation d'un emballage à deux compartiments isothermes.
**La** **fig. 2** est une coupe transversale selon la ligne **II-II** de la **fig. 1****.**
La **fig. 3** est une coupe transversale selon la ligne **III-III** de la **fig. 2****.**
La **fig. 4** est une vue en plan d'un flan prédécoupé permettant d'obtenir une caisse constitutive de l'emballage illustré **fig. 1****,** vue sur laquelle les lignes de coupe et de les contours du flan sont représentés en traits continus tandis que les lignes de pliage sont illustrées en traits discontinus ou pointillés.
La **fig. 5** est une vue en plan d'un flan prédécoupé formant la structure articulée d'un premier élément d'emballage constitutif de l'emballage illustré **fig. 1**, vue sur laquelle les lignes de coupe et les contours du flan sont représentés en traits continus tandis que les lignes de pliage sont illustrées en traits discontinus ou pointillés.
La **fig. 6** est une vue à plat du premier élément d'emballage obtenu à partir de la structure articulée illustrée **fig. 5**.
La **fig. 7** est une vue en plan d'un flan prédécoupé formant la structure articulée d'un deuxième élément d'emballage constitutif de l'emballage illustré **fig. 1**, vue sur laquelle les lignes de coupe et les contours du flan sont représentés en traits continus tandis que les lignes de pliage sont illustrées en traits discontinus ou pointillés.
La **fig. 8** est une vue à plat du deuxième élément d'emballage obtenu à partir de la structure articulée illustrée **fig. 7****.**
La **fig. 9** est une vue de dessus d'un panneau isolant susceptible de constituer un panneau intercalaire, un panneau de dessus ou encore un panneau de fond d'un emballage selon l'invention.
La **fig. 10** est une coupe longitudinale d'une variante de réalisation d'un emballage selon l'invention à un compartiment isotherme.
La **fig. 11** est une coupe transversale selon la ligne **XI-XI** de la **fig. 10****.**
La **fig. 12** est une vue en plan d'un flan prédécoupé formant la structure articulée d'un élément d'emballage constitutif de l'emballage illustré **fig. 10 et 11****,** vue sur laquelle les lignes de coupe et les contours du flan sont représentés en traits continus tandis que les lignes de pliage sont illustrées en traits discontinus ou pointillés.
La **fig. 13** est une vue à plat de l'élément d'emballage obtenu à partir de la structure articulée illustrée **fig. 12****.**

L'invention vise donc à offrir la possibilité de réaliser de manière simple un emballage isotherme qui sera, de préférence, 100 % biodégradable afin de respecter les nouvelles normes environnementales s'imposant à l'industrie.

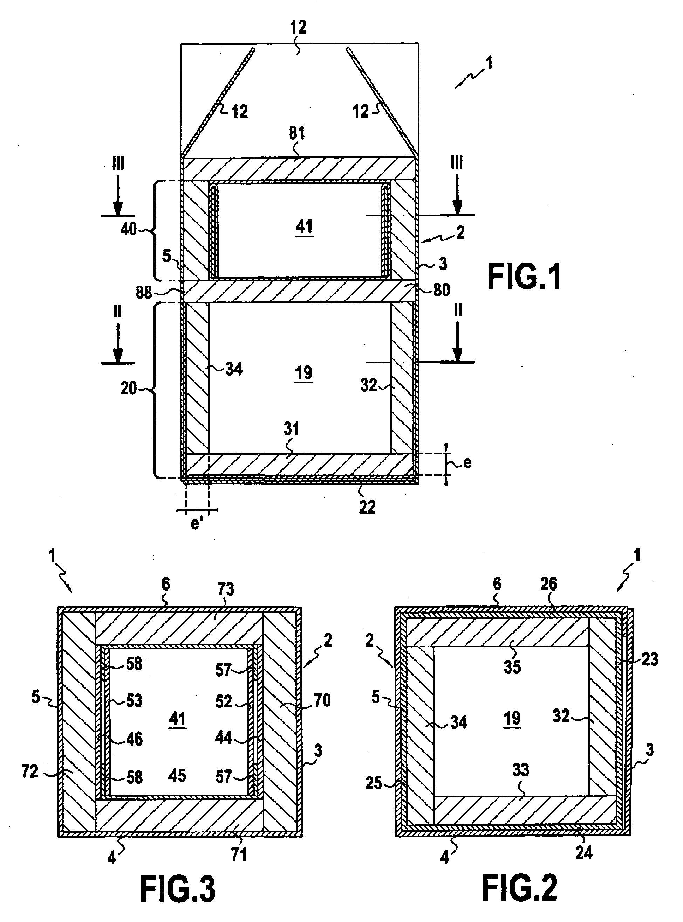

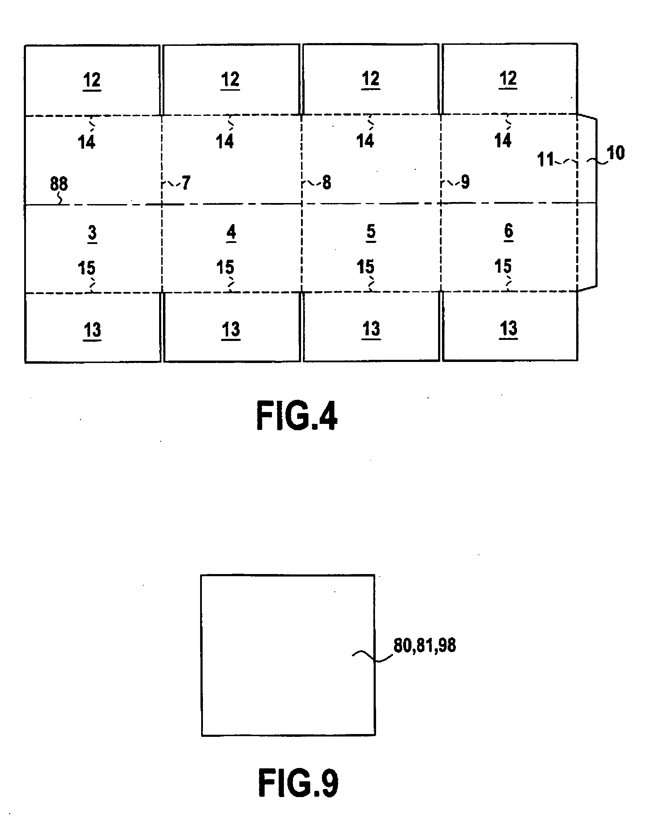

À cet effet, l'emballage, illustré aux **fig. 1 à 3** et désigné dans son ensemble par la référence **1**, comprend une caisse **2** de forme générale parallélépipèdique. De manière préférée, la caisse **2** est constituée par une caisse américaine réalisée en carton ondulé et susceptible d'être stockée dans un état pré-conformé à plat. Une telle caisse américaine est par exemple obtenue à partir d'un flan **F** prédécoupé tel qu'illustré **fig. 4** qui comprend quatre panneaux latéraux articulés **3,4,5,6** s'étendant les uns à la suite des autres en étant séparés par des lignes de pliages **7,8,9** parallèles. Le dernier panneau latéral articulé **6** est prolongé à l'opposé du panneau latéral adjacent **5** par une bande de liaison **10** dont il est séparé par une ligne de pliage **11** parallèle aux lignes de pliage **7,8,9.** La bande de liaison **10** est de manière connue en soi destinée à être contre-collée sur le premier panneau latéral articulé **3** pour définir la paroi périphérique de la caisse **2.** Afin de permettre une fermeture des extrémités supérieures et inférieures de la caisse **2,** chaque panneau articulé du flan prédécoupé **F** comprend alors en tant que moyens de fermeture un volet supérieur **12** et un volet inférieur **13** chacun séparés du panneau articulé correspondant par une ligne de pliage respectivement **14** et **15.**

La mise en volume du flan **F** pour constituer la caisse **2** est largement connue de l'homme du métier et ne nécessite donc pas de plus amples explications.

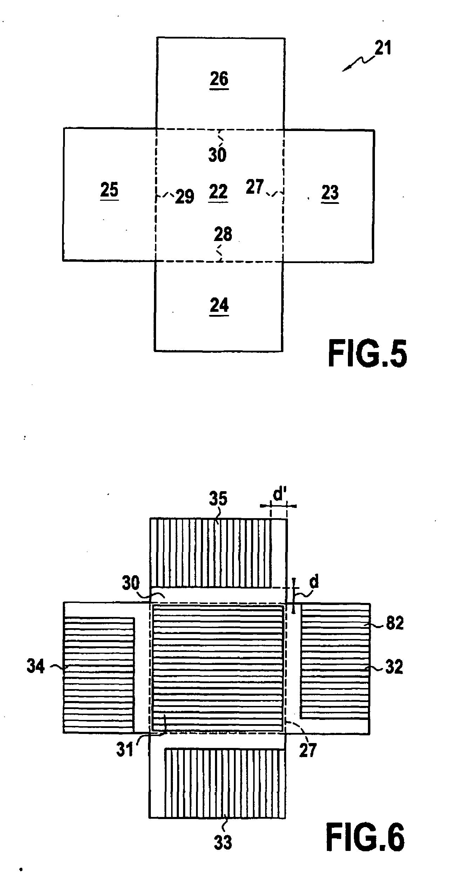

Afin de définir un compartiment isotherme **19** à l'intérieur de la caisse **2**, l'emballage selon l'invention comprend également un élément d'emballage **20** constitué à partir d'une structure articulée **21** telle qu'illustrée **fig. 5****.** La structure articulée **21** est, de préférence, réalisée dans un matériau biodégradable tel que par exemple un carton ondulé ou compact de même nature que le carton constitutif de la caisse **2.**

Selon l'exemple illustré, la structure articulée **21** comprend un panneau de fond **22** qui possède une forme rectangulaire correspondant à la forme rectangulaire de la section droite transversale de la caisse **2.** Le panneau de fond **22** est bordé par quatre panneaux de côté **23,24,25,26**, ce qui confère à la structure articulée **21** une forme de croix. Les quatre panneaux de côté **23** à **26** sont chacun séparés du panneau de fond **22** par une ligne de pliage, respectivement **27,28,29,30** qui définissent alors les quatre côtés du panneau de fond **22**.

Afin d'assurer une bonne isolation thermique du compartiment **19**, la structure articulée **21** comprend en outre cinq panneaux isolants **31** à **35** fixés respectivement sur la face interne du panneau de fond **22** et des panneaux de côté **27** à **30**. Le panneau isolant de fond **31** possède une épaisseur **e** et recouvre sensiblement toute la surface du panneau de fond **22** tout en laissant dégagées les lignes de pliage **27** à **30**, de manière à permettre un repliement des panneaux de côté **23** à **26** pour les placer perpendiculairement au panneau de fond **22.** Les panneaux isolants de côté **32** à **35** possèdent tous une même épaisseur **e'** de préférence mais non nécessairement sensiblement égale à l'épaisseur **e.** Les panneaux isolants de côté **32** à **35** recouvrent une partie seulement de chacun des panneaux de côté **23** à **26** de manière que, lorsque les panneaux de côtés sont relevés, le bord inférieur des panneaux isolants de côté **32** à **35** vienne en appui sur le panneau isolant de fond **31**, tandis qu'une tranche de chaque panneau isolant de côté est en appui sur la face interne d'un panneau isolant de côtés adjacents. Selon l'exemple illustré, le bord inférieur de chaque panneau isolant de côté est placé à une distance **d** de la ligne de pliage correspondante sensiblement égale à l'épaisseur **e** du panneau isolant de fond **31** et le bord droit de chaque panneau isolant de côté est placé à une distance **d'** du bord correspondant du panneau de côté sensiblement égal à l'épaisseur **e'** des panneaux isolants de côté. Ainsi, lors de la mise en volume de l'élément d'emballage, l'appui, des panneaux isolants de côté **32** à **35**, les uns sur les autres et sur le panneau isolant de fond **31**, réduit les phénomènes de ponts thermiques comme cela ressort des **fig. 1** et **2****.** L'élément d'emballage **20** ainsi constitué peut être stocké à plat avant son utilisation à l'intérieur de la caisse **2.** Il est à noter que la mise en volume de l'élément d'emballage **20** s'effectue aisément en repliant les panneaux de côté **23** à **26** vers l'intérieur et que cette opération est quasi automatique lorsque l'élément d'emballage **20** est placé sur le dessus de la caisse **2** et qu'il est exercé une pression vers le bas sur l'ensemble formé par le panneau de fond **22** et le panneau isolant de fond **31.**

Afin de contribuer à la biodégradabilité de l'emballage selon l'invention, les panneaux isolants **31** à **35** sont réalisés dans un matériau biodégradable tel que par exemple de la mousse à base de fécule de pomme de terre ou d'amidon de maïs par exemple sous la forme de panneaux de mousse commercialisés sous la dénomination Wase by Master-bi par la société Novamont.

L'emballage, tel qu'illustré **fig. 1**, comprend aussi un deuxième élément d'emballage **40** destiné à définir un deuxième compartiment isotherme **41** au-dessus du premier compartiment **19**. Le deuxième compartiment isotherme **41** est, selon l'exemple illustré, plus particulièrement conçu pour recevoir un matériau frigorifique tel que de la glace carbonique ou de la neige carbonique.

Selon l'exemple illustré, le deuxième élément d'emballage **40** comprend une structure articulée **42** réalisée à partir d'un flan prédécoupé d'un matériau de préférence biodégradable tel que, par exemple, un carton ondulé ou compact de même nature que le carton constitutif de la caisse **2.**

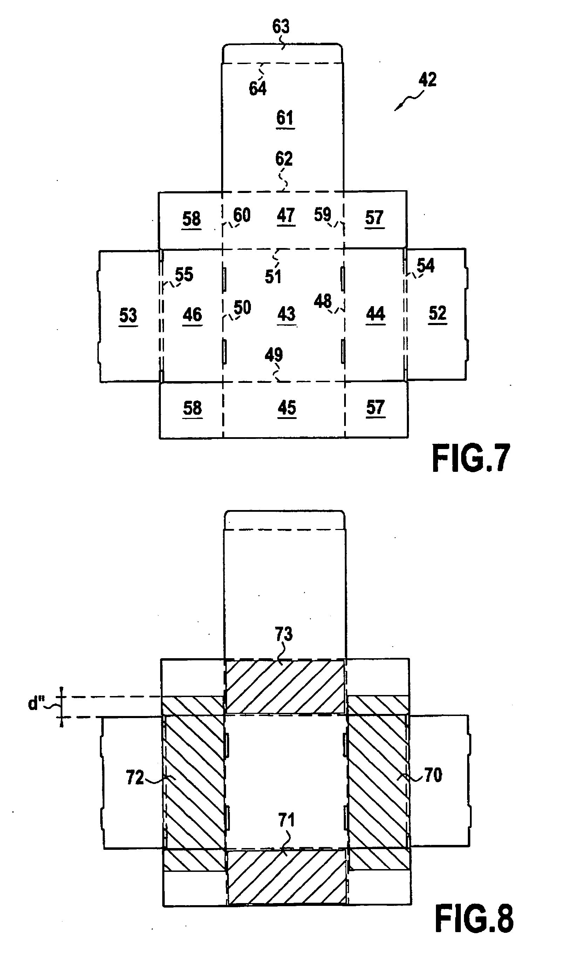

Comme le montre plus particulièrement la **fig. 7****,** la structure articulée **42** comprend un panneau de fond **43** bordé sur quatre côtés par des panneaux de côté **44** à **47** chacun séparés du panneau de fond **43** par une ligne de pliage respectivement **48** à **51**. Deux panneaux de côté opposés **46** et **44** sont chacun prolongés par un contre-panneau **52, 53** séparé du panneau de côté correspondant par une ligne de pliage **54,55** parallèle à la ligne de pliage **48,50** séparant le panneau de côté correspondant **42,46** du panneau de fond **43**. Les deux autres panneaux de côté **45** et **47** portent chacun deux volets latéraux **57,58** qui sont chacun séparés du panneau de côté correspondant par une ligne de pliage respectivement **59,60** perpendiculaire à la ligne de pliage **51** ou **49** séparant le panneau de côté correspondant **47** ou **45** du panneau de fond **43**. L'un **47** des panneaux de côté portant les volets latéraux est prolongé à l'opposé du panneau de fond **43** par un panneau de dessus **61** dont il est séparé par une ligne de pliage **72** parallèle à la ligne de pliage **51**. Le panneau de dessus **61** présente une forme et des dimensions sensiblement analogues à celles du panneau de fond **43** et possède à l'opposé du panneau de côté **47** un rabat de fermeture **63** séparé du panneau de dessus **61** par une ligne de pliage **64** parallèle à la ligne de pliage **62**.

Afin d'assurer une bonne isolation thermique du deuxième compartiment **41**, les panneaux de côté **44** à **47** de la structure articulée **42** portent sur leurs faces externes des panneaux isolants de côté **70** à **73**, plus particulièrement visibles à la **fig. 8****.** Les panneaux isolants de côté **70** à **73** sont, de préférence, réalisés dans le même matériau biodégradable que le matériau constitutif des panneaux isolants **31** à **35.** De manière préférée, les panneaux isolants de côté **70** à **73** présentent tous deux une même épaisseur **e'** et sont dimensionnés d'une part, pour avoir une largeur supérieure ou égale à la largeur des panneaux de côté **44** à **47** et, d'autre part, pour qu'au niveau de chaque angle latéral de l'élément d'emballage **41,** la tranche d'un panneau isolant de côté vienne en appui sur la face du panneau isolant de côté correspondant. À cet effet et selon l'exemple illustré, les panneaux isolants de côté **73** et **71** possèdent des dimensions sensiblement analogues à celles des panneaux de côté **47** et **45** tandis que les panneaux isolants de côté **70** et **72** débordent de part et d'autre du panneau de côté correspondant d'une distance **d"** sensiblement égale à l'épaisseur e' des panneaux isolants de côté **45** et **47**.

L'élément d'emballage **42** ainsi constitué est facilement stockable avant sa mise en oeuvre. Pour former le deuxième compartiment isotherme **41**, il suffit tout d'abord de relever les panneaux de côté **45** et **47** en formant les lignes de pliage **49** et **51** puis de rabattre à l'intérieur les volets et **57** et **58** en fermant les lignes de pliage **59** et **60** pour aligner les volets **57** et **58** sur les lignes de pliage **48** et **50.** Le montage de l'élément d'emballage **40** s'achève en relevant les panneaux de côté **44** et **46,** puis en rabattant les contre-panneaux **52** et **53** vers la face interne des panneaux **46** et **44** de manière à emprisonner les volets **57** et **58.** À ce stade, l'élément d'emballage **40** définit une boîte ouverte sur le dessus dont les faces latérales externes sont isolées par les panneaux isolants **70** à **73**, comme le montre la **fig. 3**. Il est à noter que cette disposition des panneaux isolants **70** à **73** permet d'éviter tout phénomène de compensation directement au niveau de leur surface, de sorte qu'il est possible de placer dans le deuxième compartiment **41** des produits particulièrement froids comme de la glace carbonique ou de la neige carbonique sans risque de dégradation du matériau biodégradable constitutif des panneaux isolants **70** à **73.**

L'emballage comprenant la caisse **2**, le premier élément d'emballage **20** et le deuxième élément d'emballage **40** est mis en oeuvre de la manière suivante.

Après formation de la caisse **2** et fermeture de son fond, le deuxième élément d'emballage **20** est engagé dans la caisse **2** pour y définir le premier compartiment isotherme **19** qui est ouvert sur le dessus. Il est alors possible de disposer à l'intérieur du premier compartiment isotherme **19** des produits devant être conservés à une température positive modérée, de préférence inférieure à 10 °C. Une fois les produits disposés dans le premier compartiment isotherme **19,** ce dernier est fermé au moyen d'un panneau isolant intercalaire **80** qui présente une forme rectangulaire complémentaire à celle de la caisse **2** et sensiblement analogue à celle du panneau de fond **22** comme le montre la **fig. 9****.** Le panneau isolant intercalaire **80** est réalisé dans le même matériau biodégradable que les panneaux isolants des éléments d'emballage **20** et **40** et possède une épaisseur **e**".

La boîte constitutive du deuxième élément d'emballage **40** et définissant le deuxième compartiment isotherme **41** est ensuite placée sur le panneau isolant intercalaire **80**. Afin d'assurer la régulation de la température du premier compartiment isotherme **19,** le deuxième compartiment isotherme **41** est rempli d'un matériau accumulateur de frigories telles que par exemple de la glace carbonique et/ou de la neige carbonique qui seront, de préférence, placées dans un sac en matière plastique biodégradable afin de limiter les phénomènes de condensation au contact de la glace carbonique ou de la neige carbonique. Lorsque le matériau accumulateur de frigories est disposé à l'intérieur du deuxième compartiment isotherme **41**, le panneau de dessus **61** est refermé. Afin de réduire les risques de contact accidentel avec le contenu du compartiment isotherme **41**, le panneau de dessus **61** pourra être scellé au moyen d'une bande adhésive ou encore par des systèmes de fermeture verrouillables.

Un panneau isolant de dessus **81**, de forme complémentaire à celle de la caisse **2** et analogue à celle du panneau isolant intercalaire **80**, est ensuite placé au-dessus du panneau **61** de manière à isoler le deuxième compartiment isotherme **41**. Les volets de fermeture de la caisse **2** peuvent alors être rabattus et scellés au moyen par exemple d'une bande adhésive de préférence en matériau biodégradable.

L'emballage ainsi constitué est particulièrement adapté au transport en température contrôlée de produits sensibles à l'intérieur du premier compartiment isotherme. Ainsi, dans le cas de l'utilisation pour la réalisation de la caisse **2** des structures articulées **21** et **42** d'un carton ondulé et de l'utilisation pour la réalisation des panneaux isolants **31** à **35**, **70** à **73**, **80** et **81** de plaques composites de 30 mm à 40 mm d'épaisseur pour constituer un emballage dont le premier compartiment isotherme **19** possède un volume de 30 litres tandis que le deuxième compartiment **41** possède un volume de 18 litres. Il a été possible, en disposant 10 à 12 kg de glace carbonique dans le deuxième compartiment isotherme **41**, de maintenir la température à l'intérieur du premier compartiment isotherme **19** à une valeur inférieure à 25°C pendant 90 heures avec des pics de température extérieure de 45°C.

Afin d'assurer une certaine homogénéité de la température à l'intérieur du premier compartiment isotherme **19**, les faces des panneaux isolants **31** à **35** et **80** orientées vers l'intérieur du compartiment isotherme 19 présentent de préférence des conformations en creux et/ou en bosses de manière à définir des canaux de circulation de l'air par convection entre la paroi froide constituée par le panneau isolant intercalaire **80** et la paroi chaude constituée par le panneau isolant de fond **31**. Selon l'exemple illustré, les conformations en creux ou en bosses sont définies par des cannelures ou rainures **82** qui sont orientées verticalement pour les panneaux isolants de côté **32** à **35**.

Afin de faciliter l'accès au contenu du premier compartiment sans avoir à ôter le deuxième compartiment isotherme et risquer un contact accidentel avec les produits cryogéniques qu'il est susceptible de contenir, les parois latérales ou panneaux de côté **3** à **6** de la caisse **2** comprennent des moyens de découpes périphériques **88** tels qu'une bande d'arrachage périphérique aménagée au voisinage de l'ouverture supérieure du premier compartiment isotherme **19** et adaptée pour permettre la découpe des parois latérales et autoriser ainsi une séparation entre la partie de la caisse en fermant le premier compartiment isotherme **19** et la partie de la caisse en fermant le deuxième compartiment isotherme **41**.

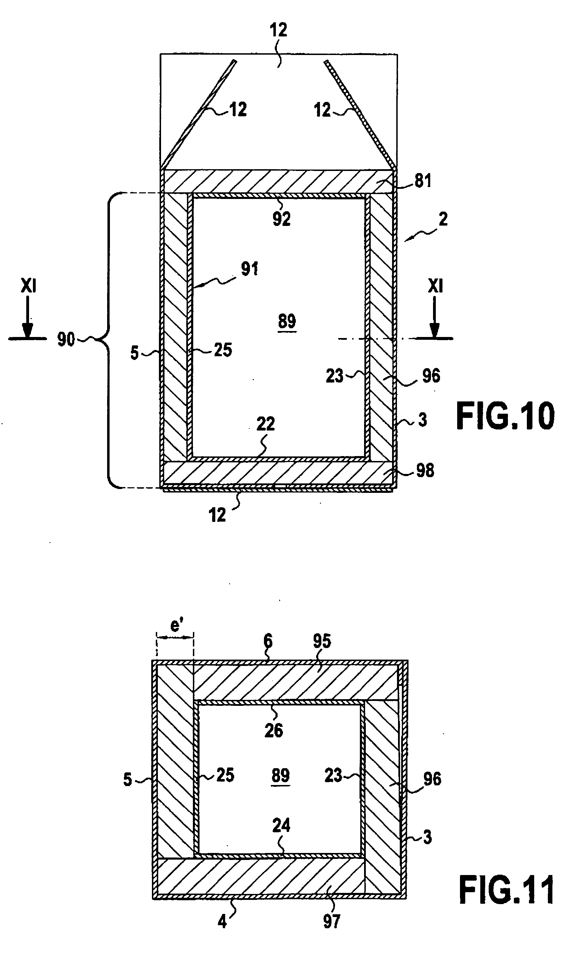

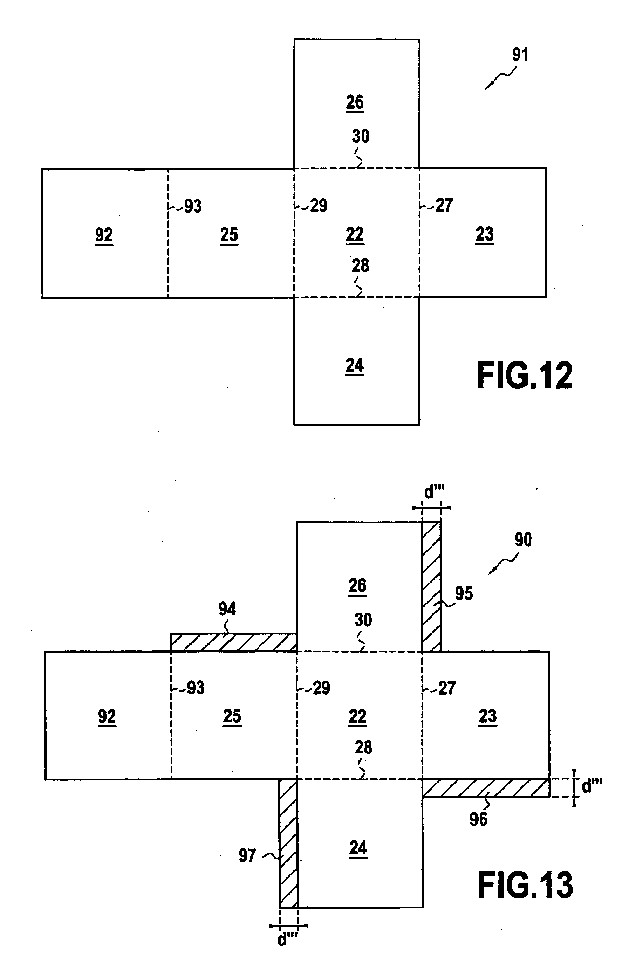

Selon l'exemple décrit précédemment, l'emballage comprend deux compartiments isothermes ; toutefois, l'emballage selon l'invention peut ne comprendre qu'un seul compartiment isotherme **89** comme le montre les **fig. 10** et **11**. Le compartiment isotherme est alors défini au moyen d'un élément d'emballage **90** comprenant une structure articulée en croix **91,** illustrée **fig. 12****,** qui diffère de celle illustrée à la **fig. 3** en ce que l'un des panneaux de côté **25** est prolongé par un panneau de dessus **92** dont il est séparé par une ligne de pliage **93** parallèle à la ligne de pliage **29**. Les faces extérieures des panneaux de côté **23** à **26** sont alors recouvertes de panneaux isolants **94** à **97** d'épaisseur **e'** qui débordent au niveau du bord droit de chaque panneau de côté **23** à **26** d'une distance **d"** sensiblement égale à l'épaisseur **e'** comme le montre la **fig. 13****.**

L'élément d'emballage **90** est adapté pour être disposé à l'intérieur de la caisse **2** en reposant sur un panneau isolant de fond **98** de forme rectangulaire et complémentaire à celle de la caisse **2** comme le montre la **fig. 11**. Après remplissage du compartiment isotherme **89**, le panneau de dessus **92** est rabattu et un panneau isolant de dessus du type du panneau isolant de dessus **81** est mis en place de manière à isoler la partie haute du compartiment isotherme **89.** La fermeture de la caisse **2** intervient alors comme expliqué précédemment. L'emballage ainsi constitué est et plus particulièrement adapté à aux transports de produits en température négative comme, par exemple, des petites quantités de glace carbonique ou de neige carbonique.

Bien entendu, diverses autres modifications peuvent être apportées à l'emballage ou l'élément d'emballage selon l'invention dans le cadre des revendications.

## Revendications

1. Elément d'emballage pour la protection et l'isolation thermique de produits divers comprenant :
■ une structure articulée (**91**) réalisée à partir d'au moins un flan prédécoupé pour comprendre au moins quatre panneaux de côté (**23** à **26**),
■ au moins quatre panneaux isolants (**94** à **97**) réalisés en matériaux thermiquement isolants et fixés chacun sur l'une des faces d'un panneau de côté de la structure articulée (91) de manière à permettre, d'une part, un stockage à plat de l'élément d'emballage et, d'autre part, une mise en volume de l'élément d'emballage dans laquelle les panneaux de côté sont perpendiculaires deux à deux, **caractérisé en ce qu'**il comprend
■ les panneaux isolants de côté (**94** à **97**) étant placés sur les faces externes des panneaux de côté (23 à 26) et possédant une épaisseur **e'** et débordant chacun du panneau de côté correspondant d'une distance **d"** supérieure ou égale à l'épaisseur **e'.**

2. Élément d'emballage selon la revendication 1, **caractérisé en ce que** les panneaux isolants de côté (**94** à **97**) sont adaptés pour qu'au niveau de chaque angle formé par deux panneaux de côtés adjacents la tranche d'un panneau isolant soit en appui sur une face du panneau isolant adjacent, lorsque l'élément d'emballage est mis en volume.

3. Élément d'emballage selon la revendication 1 ou 2, **caractérisé en ce que** la structure articulée (**97**) comprend un panneau de fond (**22**) séparé de l'un au moins des panneaux de côté (**94** à **97**) par une ligne de pliage (**27** à **30**).

4. Élément d'emballage selon la revendication 3, **caractérisé en ce que** le panneau de fond (**22**) de la structure articulée, est bordé par les quatre panneaux de côté (**94** à **97**) qui sont chacun séparés du panneau de fond par une ligne de pliage (**27** à **30**).

5. Elément d'emballage selon la revendication 3 ou 4, **caractérisé en ce que** la structure articulée (**91**) comprend un panneau de dessus (**92**) séparé d'un panneau de côté (**25**) par une ligne de pliage (**93**).

6. Élément d'emballage selon l'une des revendications 1 à 5, **caractérisé en ce que** la structure articulée (**91**) et les panneaux isolants (**93** à **96**) sont réalisés en matériaux biodégradables, les panneaux étant de préférence réalisés en mousse à base de fécule de pomme de terre ou fécule d'amidon ou de maïs et la structure articulée étant de préférence réalisée en carton compact ou carton ondulé biodégradable.

7. Emballage pour le conditionnement et l'isolation thermique de produits divers, **caractérisé en ce qu'**il comprend :
■ une caisse (**2**) de forme générale parallélépipédique comprenant au moins une ouverture supérieure associée à des moyens de fermeture (**12**),
■ un élément d'emballage (**20**) selon l'une des revendications 1 à 6 mis en volume et disposé dans la caisse pour y définir un compartiment isotherme (**89**) de réception de produits.

8. Emballage selon la revendication 7, **caractérisé en ce qu'**il comprend :
■ un panneau isolant de fond (**98**), de forme rectangulaire complémentaire à celle de la caisse, recouvrant l'intégralité du fond de la caisse,
■ un élément d'emballage (**90**) selon l'une des revendications 1 à 6 qui est mis en volume et disposé dans la caisse sur le panneau isolant de fond et qui définit le compartiment isotherme (**89**) ouvert sur le dessus,
■ un panneau isolant (**8**) de dessus (**81**), de forme rectangulaire complémentaire à celle de la caisse, qui est placé en appui sur l'élément d'emballage de manière à isoler le compartiment isotherme des moyens de fermeture de la caisse.

9. Emballage selon l'une des revendications 7 ou 8, **caractérisé en ce que** :
■ la caisse (**2**),
■ la structure articulée (**91**) du ou des éléments d'emballage (**90**) sont réalisés en matériaux biodégradables et de préférence en carton compact ou ondulé biodégradable,
■ les panneaux isolants (**80, 81, 94 à 97, 98**) sont réalisés en matériaux biodégradables et de préférence en mousse à base de fécule de pomme de terre, d'amidon ou de maïs.

## Claims

1. A packaging element for protecting and thermally insulating various products, comprising:
■ a hinged structure (91) formed from at least one pre-cutout blank to comprise at least four side panels (23 to 26).
■ at least four insulating panels (94 to 97) made in thermally insulating materials and each fastened onto one of the faces of a side panel of the hinged structure (91) so as firstly to allow flat storage of the packaging element and secondly to allow assembly of the packaging element wherein the side panels lie perpendicular two by two,
**characterized in that**:
■ the insulating side panels (94 to 97) are placed on the outer faces of the side panels (23 to 26) and have a thickness e' each projecting beyond the corresponding side panel by a distance d" equal to or greater than the thickness e'.

2. The packaging element according to claim 1, **characterized in that** the insulating side panels (**94** to **97**) are adapted so that at each angle formed by two adjacent side panels the edge of one insulating panel bears upon a face of the adjacent insulating panel when the packaging element is assembled.

3. The packaging element according to claim 1 or 2, **characterized in that** the hinged structure (**97**) comprises a bottom panel (**22**) separated from at least one of the side panels (**94** to **97**) by a fold line (**27** to **30**).

4. The packaging element according to claim 3, **characterized in that** the bottom panel (**22**) of the hinged structure is bordered by the four side panels (**94** to **97**) which are each separated from the bottom panel by a fold line (**27** to 30).

5. The packaging element according to claim 3 or 4, **characterized in that** the hinged structure (**91**) comprises a top panel (**92**) separated from a side panel (**25**) by a fold line (**93**).

6. The packaging element according to one of claims 1 to 5, **characterized in that** the hinged structure (**91**) and the insulating panels (**93** to **96**) are made in biodegradable materials, the panels preferably being made from starch-based foam containing potato, cereal or corn starch, and the hinged structure preferably being made in compact cardboard or biodegradable corrugated cardboard.

7. Packaging for packaging and thermally insulating various products, **characterized in that** it comprises:
■ a box (**2**) of general parallelepiped shape comprising at least one upper opening associated with closing means (**12**);
■ a packaging element (**20**) according to one of claims 1 to 6 assembled and arranged in the box to define an insulated compartment therein (**89**) for receiving products.

8. The packaging according to claim 7 **characterized in that** it comprises:
■ a bottom insulating panel (98) of rectangular shape mating with the shape of the box and entirely covering the bottom of the box;
■ a packaging element (90) according to one of claims 1 to 6 which is assembled and arranged in the box on the bottom insulating panel and which defines the insulated compartment (**89**) open on the topside;
■ a topside (**81**) insulating panel (**8**) of rectangular shape mating with the shape of the box, which is placed bearing upon the packaging element so as to insulate the insulated compartment from the box closing means.

9. The packaging according to one of claims 7 or 8 **characterized in that**:
■ the box (**2**);
■ the hinged structure (**91**) of the packaging element(s) (**90**) are made in biodegradable materials and preferably in compact cardboard or biodegradable corrugated cardboard;
■ the insulating panels (**80**, **81**, **94** to **97**, **98**) are made from biodegradable materials and preferably from starch-based foam containing potato, cereal or corn starch.

## Patentansprüche

1. Verpackungselement zum Schutz und zur Wärmeisolierung verschiedener Produkte, umfassend:
- eine Gelenkstruktur (91), die aus wenigstens einem vorgeschnittenen Zuschnitt gefertigt ist, um wenigstens vier Seitenteile (23 bis 26) zu umfassen,
- wenigstens vier isolierende Teile (94 bis 97), die aus wärmeisolierenden Materialien gefertigt und jeweils an einer der Seiten eines Seitenteils der Gelenkstruktur (91) befestigt sind, um einerseits eine Lagerung des Verpackungselements in flachliegendem Zustand und andererseits einen Aufbau des Verpackungselements, bei dem die Seitenteile paarweise senkrecht verlaufen, zu ermöglichen,
**dadurch gekennzeichnet, daß**:
- die isolierenden Seitenteile (94 bis 97) an den Außenseiten der Seitenteile (23 bis 26) angeordnet sind und eine Dicke e' aufweisen und jeweils über das entsprechende Seitenteil um einen Abstand d" hinausragen, der größer als die oder gleich der Dicke e' ist.

2. Verpackungselement nach Anspruch 1, **dadurch gekennzeichnet, daß** die isolierenden Seitenteile (94 bis 97) angepaßt sind, damit im Bereich einer jeden von zwei benachbarten Seitenteilen gebildeten Ecke die Kante eines isolierenden Teils an einer Seite des benachbarten isolierenden Teils anliegt, wenn das Verpackungselement aufgebaut ist.

3. Verpackungselement nach Anspruch 1 oder 2, **dadurch gekennzeichnet, daß** die Gelenkstruktur (91) einen Bodenteil (22) umfaßt, der von wenigstens einem der Seitenteile (94 bis 97) durch eine Faltlinie (27 bis 30) getrennt ist.

4. Verpackungselement nach Anspruch 3, **dadurch gekennzeichnet, daß** der Bodenteil (22) der Gelenkstruktur von den vier Seitenteilen (23 bis 26) eingefaßt ist, die jeweils durch eine Faltlinie (27 bis 30) von dem Bodenteil getrennt sind.

5. Verpackungselement nach Anspruch 3 oder 4, **dadurch gekennzeichnet, daß** die Gelenkstruktur (91) einen oberseitigen Teil (92) umfaßt, der von einem Seitenteil (25) durch eine Faltlinie (93) getrennt ist.

6. Verpackungselement nach einem der Ansprüche 1 bis 5, **dadurch gekennzeichnet, daß** die Gelenkstruktur (91) und die isolierenden Teile (93 bis 96) aus biologisch abbaubaren Materialien gefertigt sind, wobei die Teile vorzugsweise aus Schaumstoff auf der Basis von Kartoffelstärke oder Getreide- oder Maisstärke gefertigt sind und wobei die Gelenkstruktur vorzugsweise aus biologisch abbaubarer Vollpappe oder Wellpappe gefertigt ist.

7. Verpackung zum Verpacken und Wärmeisolieren verschiedener Produkte, **dadurch gekennzeichnet, daß** sie umfaßt:
- eine allgemein quaderförmige Schachtel (2), die wenigstens eine obere, Schließmitteln (12) zugeordnete Öffnung umfaßt,
- ein Verpackungselement (20) nach einem der Ansprüche 1 bis 6, das aufgebaut und in der Schachtel angeordnet ist, um hierin ein isothermes Fach (89) zur Aufnahme von Produkten zu definieren.

8. Verpackung nach Anspruch 7, **dadurch gekennzeichnet, daß** sie umfaßt:
- einen isolierenden Bodenteil (98) mit zu der Form der Schachtel ergänzender rechteckiger Form, der den gesamten Boden der Schachtel bedeckt,
- ein Verpackungselement (90) nach einem der Ansprüche 1 bis 6, das aufgebaut und in der Schachtel an dem isolierenden Bodenteil angeordnet ist und das das an der Oberseite offene isotherme Fach (89) definiert,
- einen isolierenden oberseitigen Teil (81) mit zu der Form der Schachtel ergänzender rechteckiger Form, der an dem Verpackungselement anliegend angeordnet ist, um das isotherme Fach von den Schließmitteln der Schachtel zu trennen.

9. Verpackung nach einem der Ansprüche 7 oder 8, **dadurch gekennzeichnet, daß**:
- die Schachtel (2),
- die Gelenkstruktur (91) des oder der Verpackungselemente (90) aus biologisch abbaubaren Materialien und vorzugsweise aus biologisch abbaubarer Voll- oder Wellpappe gefertigt sind,
- die isolierenden Teile (80, 81, 94 bis 97, 98) aus biologisch abbaubaren Materialien und vorzugsweise aus Schaumstoff auf der Basis von Kartoffelstärke, Getreidestärke oder Maisstärke gefertigt sind.
